# FASCICULE DE BREVET EUROPEEN

(11) **EP 0 463 954 B1**
(45) Date de publication et mention de la délivrance du brevet: **24.08.1994**
(21) Numéro de dépôt: 91401704.1
(22) Date de dépôt: 25.06.1991
(51) Int. Cl.: G01L 5/12, G01M 15/00

(54) **Balance de mesure de la poussée d'un turboréacteur**
Waage zur Messung des Achsialschubs eines Turbinenstrahltriebwerkes
Balance for measuring axial thrust of a turbojet

(30) Priorité: 27.06.1990 FR 9008067
(43) Date de publication de la demande: 02.01.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Brault, Jean Henri, F-77170 Brie Comte Robert (FR); Cotterlaz, Arnaud, F-75019 Paris (FR); Delorme, Jacques Maurice, F-77380 Combs la Ville (FR)
(74) Mandataire: Berrou, Paul

(56) Documents cités:
- FR-A- 1 389 209
- US-A- 3 205 704
- US-A- 3 463 001

## Description

Le secteur technique de la présente invention est celui des bancs d'essais pour les turboréacteurs d'aviation et plus précisément celui des balances de mesure de la poussée des turboréacteurs.

Les bancs d'essai de turboréacteurs sont constitués notamment d'un bâtiment à l'intérieur duquel le turboréacteur (ou moteur) à essayer est accroché à une structure pour ses essais de fonctionnement tandis qu'une salle de contrôle voisine permet de commander l'ensemble des essais et d'en dépouiller les résultats.

La structure d'accrochage du turboréacteur a en général deux fonctions : d'une part permettre l'accrochage du moteur dans un bâtiment adapté à l'essai et isolé phoniquement de la salle de contrôle et d'autre part, permettre la mesure de la poussée statique effective du moteur.

Pour cela, il est classique d'équiper le moteur d'un adaptateur qui simule les conditions d'accrochage du turboréacteur, équivalentes à celles d'un accrochage réel du turboréacteur sur un pylone d'avion. Ce adaptateur est ensuite fixé sous une balance de mesure de poussée, généralement ensemble comprenant : un chassis mobile, un chassis fixe et une structure interface. Un tel dispositif a deja eté decrit dans le FR.A. 13 89 209.

La mesure de la poussée est classique et réalisée par une mesure de l'effort longitudinal généré par le moteur en fonctionnement (poussée) et transmis au système de mesure par l'intermédiaire du chassis mobile et des bielles de reprise d'effort.
Le chassis mobile est traditionnellement fixé au chassis fixe par des lames de flexion verticales.

Des capteurs de mesure du déplacement extrêmement précis sont disposés entre le chassis fixe et le chassis mobile.

La précision des capteurs est extrêmement importante car la poussée réelle du moteur est calculée à partir d'un effort qui génère des déformations dans les différentes structures par lesquelles il transite.

Plus le cheminement est complexe, plus la dispersion est grande et moins la précision est bonne.
Pour obtenir les degrés de précision de 1 à 2 pour mille que requièrent ces mesures de poussée, on est amené à réaliser des structures pour les chassis fixes et mobiles d'une précision extrême ainsi que des montages très sophistiqués.

Il a deja eté proposé notamment par le US.A.3 463 001 d'utiliser seulement trois lames de fixation de manière à avoir un montage parfaitement isostatique du moteur dans son banc d'essai.

La presente invention a pour but de supprimer la plupart des risques de précontraintes dans les assemblages de la balance de mesure ce qui autorisera l'usage de capteurs de mesure moins sophistiqués (et donc moins coûteux) que par le passé, pour une précision de mesure améliorée.

L'invention a aussi pour but, en réalisant des dispositifs d'assemblage n'introduisant pas (ou peu) de contraintes, de permettre de se contenter, pour la structure interface et le chassis mobile, de structures mécano-soudées sans grande précision et donc d'un faible coût et réalisables sans technologies complexes, car les défauts de précision dans la réalisation de ces structures n'introduiront pas de contraintes dans le montage.

L'invention a également pour but de réaliser des balances de mesure de poussée aptes à tester une gamme très élargie de turboréacteurs, allant de 100 kN de poussée à 600 kN. Ceci est rendu possible par la grande simplicité des structures qui dégage un espace maximal pour le moteur et permet l'introduction dans des salles de dimensions standard, de moteurs de 3 à 4 mètres de diamètre, ce que ne permet aucun banc d'essai existant.

L'objet de l'invention est donc de réaliser une balance de poussée du type qui a été décrit plus haut comportant de façon connue un chassis mobile suspendu par des lames flexibles de suspension à une structure interface fixée au plafond d'un bâtiment, le chassis mobile étant apte à supporter un turboréacteur équipé d'un adaptateur et comportant en combinaison un système qui mesure la poussée à partir de l'effort généré par le turboréacteur et transmis par le chassis mobile à la structure interface lors de la mise en fonctionnement du turboréacteur.

Ladite balance de mesure comporte deux lames de suspension avant disposées dans un plan transversal et symétriquement l'une de l'autre par rapport au plan médian longitudinal de la balance et une lame de suspension arrière disposée transversalement dans le plan médian de la balance, les trois lames réalisant une suspension isostatique du chassis mobile sur la structure interface.

Selon une caractéristique de l'invention, l'adaptateur est positionné sous le chassis mobile au moyen de trois dispositifs de centrage disposés dans le prolongement axial des trois lames de suspension et aptes à assurer le blocage isostatique de six degrés de liberté entre adaptateur et chassis mobile, le dispositif de centrage arrière bloquant trois degrés de liberté tandis que les deux dispositifs de centrage avant bloquent respectivement deux et un degré de liberté.

Une particularité de l'invention est que le chassis mobile a une forme de U horizontal ouvert vers l'avant et que la structure interface est constituée de deux parties avant séparées et d'une partie arrière centrale, chacunede ces trois parties supportant une des lames de suspension. Cette structure a pour intérêt d'être compatible aves trois types de hissage possibles du turboréacteur sur la balance, au moyen d'un dispositif de hissage, porté soit par le chassis mobile, soit par le plafond du bâtiment, soit au moyen d'un dispositif de hissage mobile sur un monorail pénétrant entre les parties avant de la structure interface.

D'autres caractéristiques de l'invention seront explicitées dans le complément de description qui va suivre accompagné de planches de dessins représentant de façon non limitative un mode préférentiel de réalisation de l'invention.

Parmi ces planches :
- la figure 1 est une vue en perspective éclatée de la balance de mesure et d'un turboréacteur équipé de son adaptateur ;
- la figure 2 est une vue en élévation de la structure interface équipée des lames de suspension et de barres de sécurité, ainsi que du dispositif de mesure de poussée ;
- la figure 3 montre en section le mode d'accrochage des lames flexibles de suspension sur la structure interface et le chassis mobile ;
- la figure 4 montre en section l'accrochage des barres verticales de sécurité sur la structure interface et le chassis mobile ;
- la figure 5 montre une élévation en section du dispositif de mesure de la poussée, placé entre la structure interface et le chassis mobile ;

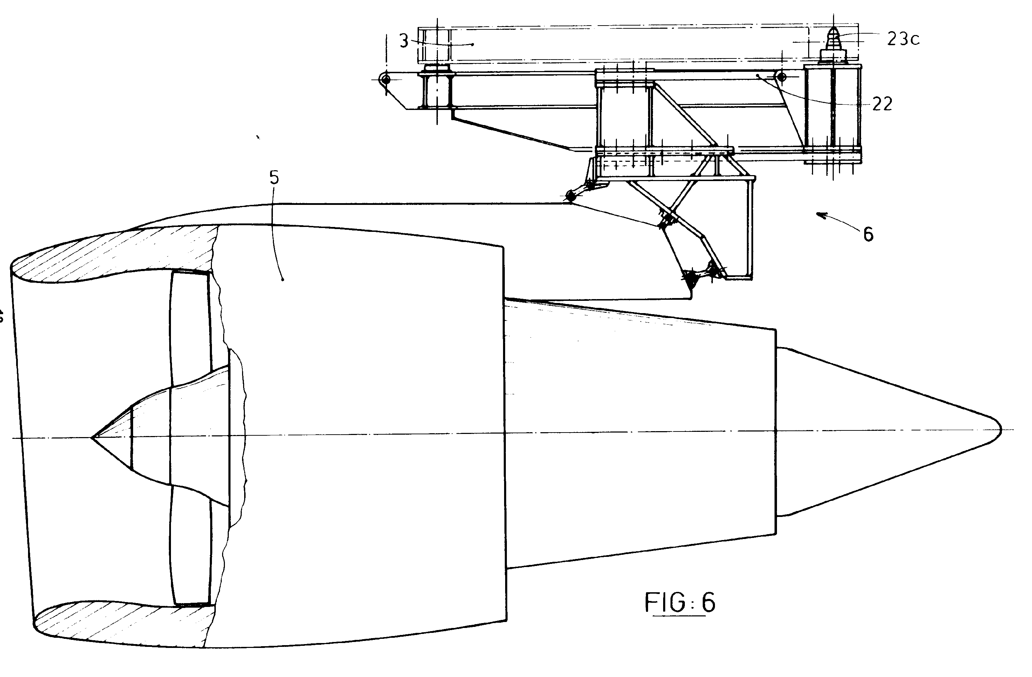

- la figure 6 est une vue en élévation d'un turboréacteur équipé de son adaptateur permettant sa fixation sous le chassis mobile.
- les figures 7, 8 et 9 représentent respectivement les deux dispositifs de centrage avant et le dispositif de centrage arrière de l'adaptateur sur le chassis moible ;
- la figure 10 montre une vue des crochets de fixation de l'adaptateur sur le chassis mobile selon un mode préférentiel de représentation ;
- la figure 11 montre une variante des moyens de hissage du turboréacteur vers la balance.

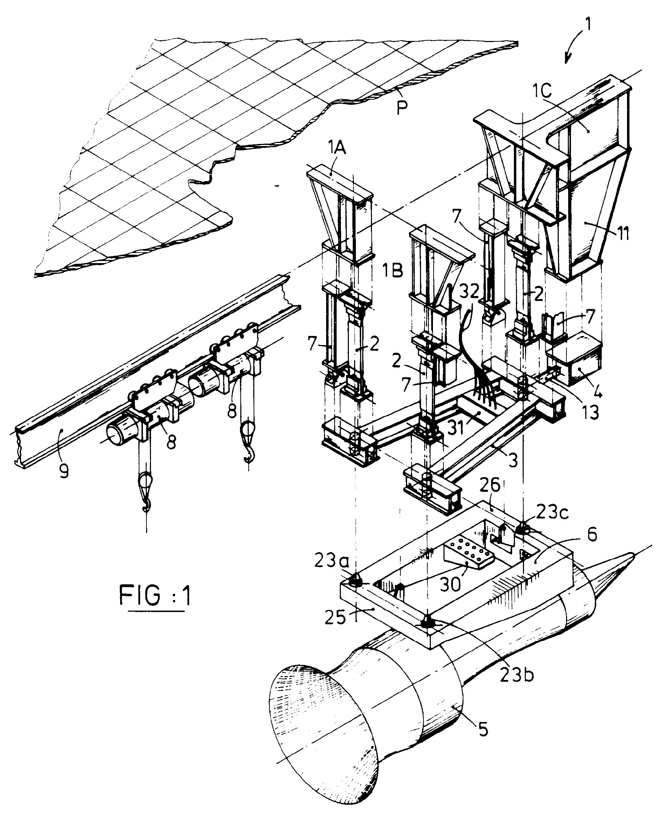

Ainsi qu'on l'a représenté à la figure 1, la balance de mesure comporte :
- une structure interface 1 formée de deux parties avant séparées 1A et 1B et d'une partie arrière 1C ;
- fixées à la structure interface 1, trois lames flexibles de suspension 2 permettent la suspension d'un chassis mobile 3 en forme de U horizontal ouvert vers l'avant;
- à l'arrière du chassis mobile un système 4 de mesure de poussée placé entre le chassis mobile et une partie verticale arrière de la structure interface ;
- un turboréacteur 5 équipé de son adaptateur 6 ;
- entre la structure interface 1 et le chassis mobile 3 quatre barres verticales de sécurité 7 ;
- un système de hissage 8 par treuils porté par un monorail 9 fixé au plafond du bâtiment du banc d'essai. D'autres variantes du système de hissage seront indiquées plus loin.

Les divers sous-ensembles de la balance seront explicités en regardant les figures respectives les représentant, depuis le haut de la balance jusqu'à la partie la plus basse, à savoir l'adaptateur.

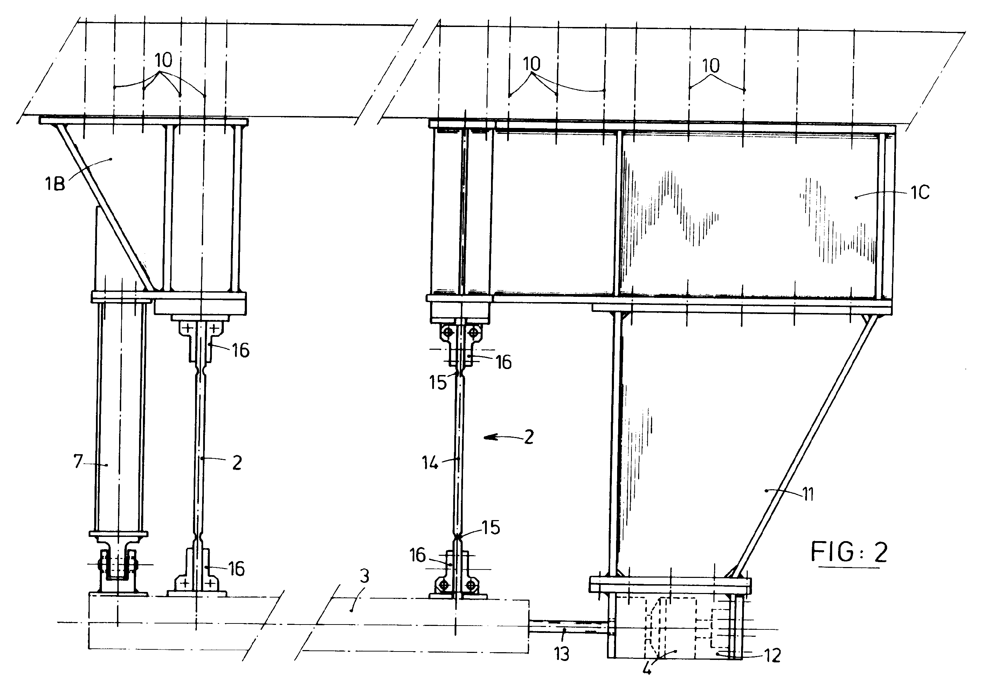

La structure interface représentée à la figure 2 comporte deux parties avant 1A et 1B et une autre partie arrière 1C en structures mécano-soudées fixées en 10 au plafond P du bâtiment. La partie arrière 1C est située dans le plan médian de la balance et comporte une partie verticale 11 sous laquelle estdisposéun boîtier 12 comportant les capteurs 4 de mesure de poussée reliés par une tige 13 au chassis mobile 3.

Les deux parties avant 1A et 1B sont symétriques par rapport au plan longitudinal médian de la balance. Sous chacune des parties 1A et 1B et sous la partie centrale de la pièce arrière 1C sont accrochées trois lames verticales 2 de suspension.

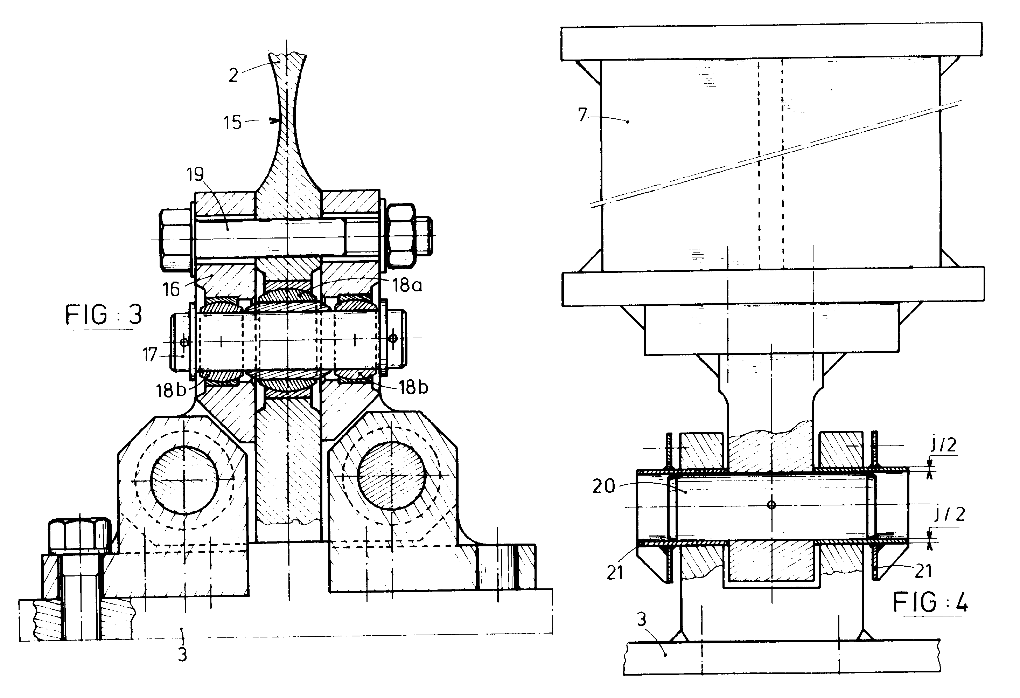

Celles-ci montrées à la figure 3, comportent une âme de section rectangulaire 14 et à chaque extrémité une zone amincie 15, de flexibilité augmentée. L'encastrement des lames 2 dans les chapes 16 de la structure interface et du chassis mobile, est réalisé au moyen d'axes 17 supportant trois rotules 18a et 18b, permettant un encastrement sans contraintes de la lame et au moyen de boulons 19 solidarisant avec un jeu radial les lames 2 et les chapes 16.

Comme on le voit aux figures 1 et 4, entre la structure interface 1 et le chassis mobile 3, sont placées quatre barres verticales 7 de sécurité en structure mécano-soudées fixée avec jeu radial j sur chacun des chassis par un axe 20 goupillé.

Lors du transport et de la mise en place de la balance, des cales 21 sont placées autour des axes 20 pour supprimer le jeu j de façon à ne pas mettre les lames flexibles de suspension en contrainte lors des manipulations de transport.

Lors du fonctionnement de la balance, les cales 21 sont retirées, de telle sorte que le chassis mobile 3 est suspendu en réalité par les lames flexibles 2 et que celles-ci puissent fléchir sans contrainte, les barres de sécurité n'ayant pour fonction, et étant dimensionnées pou reprendre les efforts statiques et dynamiques engendrés par le chassis mobile 3, l'adaptateur 6 et le turboréacteur dans le cas d'une rupture accidentelle de l'une des lames de suspension 2, ou de la tige 13.

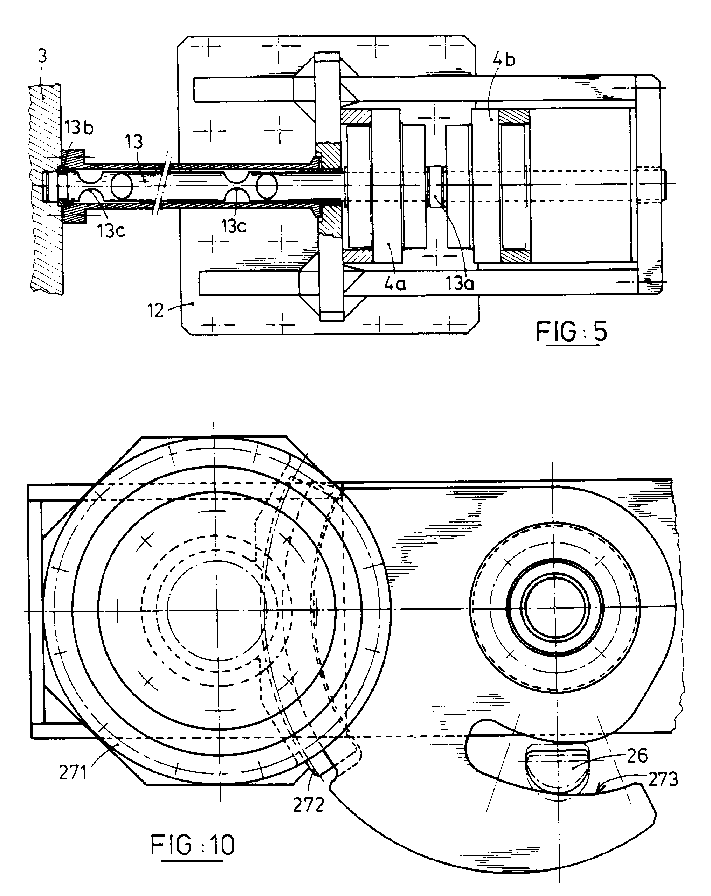

Si on observe maintenant la structure (figure 5) du système de mesure de poussée, placé entre la partie verticale arrière 11 de la structure interface 1 et le chassis mobile 3, on voit que le dispositif comporte deux capteurs de force 4a et 4b disposés sur une même tige horizontale 13 traversant un boîtier 12.

La tige 13 comporte un épaulement 13a disposé entre le capteur 4a de mesure et un capteur 4b de vérification. La tige 13 est fixée par son extrémité 13b sur le chassis mobile 3, des doubles cardans 13c permettant le positionnement longitudinal du chassis sans mise en précontrainte mécanique des lames de suspension 2.

Lors du fonctionnement du turboréacteur 5 pour la mesure de sa poussée, la montée en poussée du turboréacteur crée un effort longitudinal du chassis mobile 3 vers l'avant. Cet effort transite par la tige 13 et, par l'intermédiaire de l'épaulement 13a, fait travailler le capteur de mesure 4a en compression. De cette mise en compression du capteur dynamométrique, on déduit la force exercée sur le capteur et donc la poussée du turboréacteur. La structure particulière de la tige 13, par l'absence de contrainte qu'elle réalise entre les chassis 1 et 3, améliore la pécision d'ensemble du dispositif de mesure.

En ce qui concerne maintenant le positionnement du turboréacteur 5 sur le chassis mobile 3, on a fixé sur le turboréacteur un adaptateur 6. Celui-ci a deux fonctions : Tout d'abord, il a un rôle d'interface, car adapté à un moteur 5 donné (gamme de poussée, dimensions particulières),il permet de tester ce moteur particulier sur un banc d'essai et une balance de poussée apte à recevoir tout autre type de moteur de taille et de poussée différente.

D'autre part, l'adaptateur 6 par sa structure sous forme de barres de flexion22 reproduit fidèlement le mode d'accrochage du turboréacteur 5 sous le mât d'avion auquel il est prévu de l'utiliser,permettant ainsi de réaliser des mesurestrès réalistes du moteur en essai.

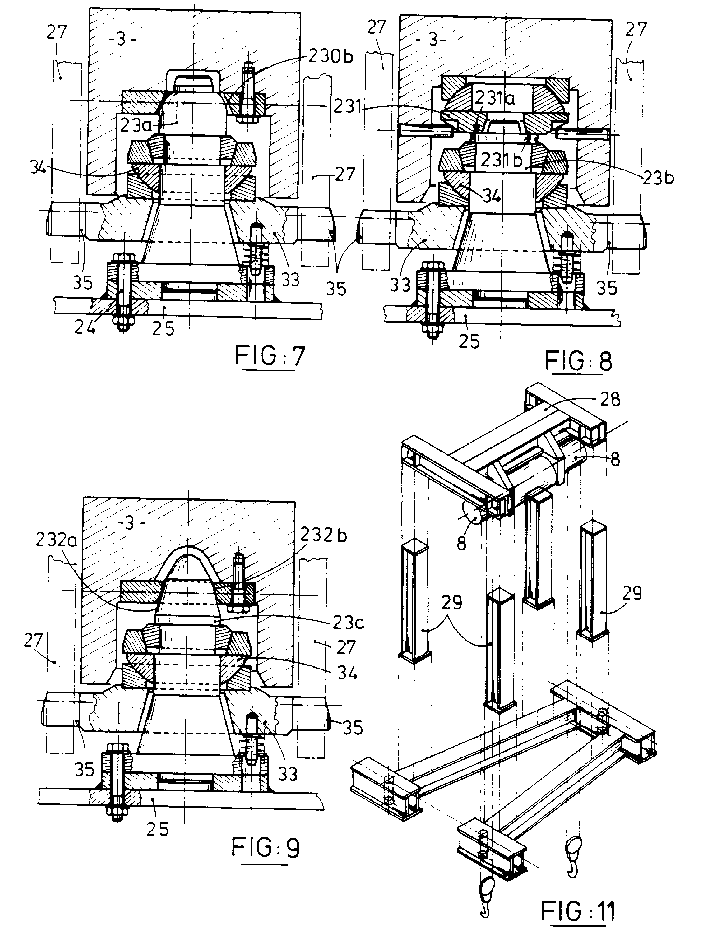

Pour fixer l'adaptateur 6 sous le chassis mobile 3, il importe tout d'abord de le positionner de façon isostatique dans un seul plan afin de ne pas introduire de contraintes dans l'assemblage. Pour ce faire, l'adaptateur comporte trois dispositifs de centrage 23 : deux avant, 23a et 23b, et un arrière, 23c qui assurent le positionnement isostatique et, par leur position dans le prolongement isostatique des lames de flexion 2, assurent la continuité mécanique pour la transmission des efforts tridirectionnels. Les dispositifs de centrage 23 sont représentés aux figures 7, 8 et 9.

A la figure 7, est représenté le dispositif de centrage avant 23a fixé par des vis 24 sur la traverse avant 25 de l'adaptateur 6. Il comporte un doigt vertical 23a possédant une portée sphérique 230a venant en contact avec un dièdre 230b porté par le chassis mobile 3. Ce centrage par contact sphère/dièdre permet un contact linéaire bloquant un degré de liberté.

A la figure 8 est représenté l'autre dispositif de centrage avant 23b. Il comporte également un doigt vertical 23b proprement dit, mais porte à son extrémité supérieure une coupelle 231 ayant une surface supérieure 231a, plane, venant en contact avec un plan d'une coupelle similaire, 231b, portée par le chassis mobile 3, réalisant ainsi un appui-plan bloquant deux degrés de liberté.

A la figure 3 est représenté le dispositif de centrage arrière constitué lui aussi d'un doigt vertical 23c porté par la traverse arrière 26 de l'adaptateur mais le doigt 23c a une portée conique 232a qui vient en appui sur une portée torique 232b du chassis mobile 3, bloquant ainsi trois degrés de liberté, ledit dispositif de centrage arrière étant de plus disposé au point de concours théorique de l'axe longitudinal par lequel passe l'effort de poussée du turboréacteur.

Par le jeu de ces trois dispositifs de centrage 23a,b, c, six degrés de liberté sont bloqués entrel'adaptateur 6 et le chassis mobile 3 et là encore on évite la transmission de contraintes d'assemblage dans la balance.

Comme on le voit aux figures 7 à 9, sur chaque doigt de centrage 23 a, b ou c, est montée une bague 33 au moyen d'un système rotulant 34. Les bagues 33 comportent deux oreilles 35 de verrouillage, aptes à coopérer avec des crochets de verrouillage 27 portés par le chassis mobile 3.

A la figure 10, on a représenté un mode préférentiel de réalisation des crochets de verrouillage 27. Ceux-ci pivotent autour d'un axe 270, sous l'action d'un pignon moteur 271, entraînant un secteur denté 272 du crochet. Dans le mode préférentiel représenté, la courbe 273 du crochet a la forme d'une spirale logarithmique, ce qui assure le verrouillage absolu du crochet et son impossibilité de desserrage accidentel sans action positive sur le mécanisme de commande de déverrouillage.

Cette structure permet donc une sécurité accrue, même en cas de rupture d'un pignon moteur 271 par exemple. Pour compléter cette description, il reste encore à préciser comment le turboréacteur 5 équipé de son adaptateur 6 peut être hissé sous le chassis mobile 3 pour y être centré et fixé par les crochets 27.

A la figure 1, on a représenté une variante de système de hissage dans lequel les treuils 8 sont mobiles sur un monorail 9 disposé en plafond du bâtiment et peuvent pénétrer entre les parties avant du chassis fixe de façon à amener le turboréacteur équipé de son adaptateur à la verticale de la balance et à pouvoir le hisser pour le centrer par les dispositifs 23.

Dans une autre variante, non représentée mais facile à imaginer, le système de hissage pourra être porté par la structure en béton du plafond du bâtiment du banc d'essai.

Dans une autre variante représentée à la figure 11, les moyens de hissage sont portés par une structure 28 montée sur des rehausses 29 portées par le chassis mobile 3, ce qui a pour avantage de ne pas contraindre les lames de flexion 2 de la balance lors du hissage et du centrage du moteur sur le chassis mobile.

Il reste encore à préciser que les connexions électro-hydrauliques du turboréacteur à tester, instrumenté, sont réalisées aux moyens d'un ou deux connecteur(s) 30 du chassis mobile coopérant avec un ou deux boîtier(s) de raccordement 31 porté(s) par le chassis mobile et en liaison (32) avec les servitudes de l'installation du banc d'essai (approvisionnement en carburant, cablages de mesure et d'instrumentation, etc..) Par sa structure isostatique, la balance de mesure selon l'invention se contente pour la majorité de ses structures d'ensembles mécano-soudées et limite au minimum les usinages coûteux, par le choix à tous les niveaux d'assemblage, de montage n'introduisant pas ou peu de contraintes dans la balance.

## Revendications

1. Balance de mesure de la poussée d'un turboréacteur comportant de façon connue un chassis mobile (3) suspendu par des lames (2) flexibles de suspension à une structure interface (1) fixée au plafond (P) d'un bâtiment, le chassis mobile étant apte à supporter un turboréacteur équipé d'un adaptateur (6) et comportant en combinaison un système de mesure (4) de poussée fixé sur une structure (11) et permettant la mesure de l'effort longitudinal exercé par le turboréacteur et qui transite par le chassis mobile et une tige de liaison (13), lors de la mise en fonctionnement du turboréacteur, lesdites lames de suspension se composant de deux lames de suspension avant (2) disposées dans un plan transversal et symétriquement l'une de l'autre par rapport au plan médian longitudinal de la balance et une lame (2) de suspension arrière disposée transversalement dans le plan médian de la balance, les trois lames réalisant une suspension isostatique du chassis mobile,
caractérisée en ce que l'adaptateur (6) est positionné sous le chassis mobile (3) au moyen de trois dispositifs de centrage (23) disposés dans le prolongement axial des trois lames (2) de suspension et aptes à assurer le blocage isostatique de six degrés de liberté entre adaptateur (6) et chassis mobile (3), le dispositif de centrage arrière (23c) bloquant trois degrés de liberté tandis que les deux dispositifs de centrage avant (23a, 23b) bloquent respectivement deux et un degré de liberté.

2. Balance de mesure selon la revendication 1, caractérisée en ce que le dispositif de centrage arrière (23c) est constitué par un doigt vertical de l'adaptateur (6) comportant une portée conique (232a) venant en contact avec une surface torique (232b) du chassis mobile (3), ledit dispositif de centrage arrière étant disposé au point de concours théorique de l'axe longitudinal par lequel passe l'effort de poussée du turboréacteur.

3. Balance de mesure selon la revendication 1, caractérisée en ce que un premier dispositif de centrage avant est constitué par un doigt vertical (23a) de l'adaptateur (6) comportant une portée sphérique (230a) venant en contact avec un dièdre (230b) porté par le chassis mobile (3).

4. Balance de mesure selon la revendication 1, caractérisée en ce que le second des dispositifs de centrage avant (23b) est constitué par un doigt vertical de l'adaptateur (6) comportant une extrémité plane (231a) en contact avec une surface plane (231b) du chassis mobile (3).

5. Balance de mesure selon l'une quelconque des revendications 1 à 4 caractérisée en ce que sur chaque doigt de centrage (23) de l'adaptateur (6) est montée une bague (33) comportant des oreilles (35) de verrouillage coopérant avec des crochets (27) de verrouillage portés par le chassis mobile (3).

6. Balance de mesure selon la revendication 5, caractérisée en ce que les bagues de verrouillage (33) sont portées par les doigts de centrage (23) au moyen d'un système rotulant (34).

7. Balance de mesure selon l'une des revendications 5 ou 6 caractérisée en ce que les crochets de verrouillage (27) ont une forme de spirale logarithmique (273).

8. Balance de mesure selon l'une quelconque des revendications 1 à 7 caractérisée en ce que entre la structure interface et le chassis mobile sont disposées quatre barres verticales (7) de sécurité aptes à maintenir sans jeu le chassis mobile (3) lors des transports et mise en place de la balance et à maintenir avec jeu ledit chassis mobile (3) lors du fonctionnement de la balance, lesdites barres de sécurité étant aptes à supporter l'ensemble formé par le chassis mobile, l'adaptateur et le turboréacteur en cas de rupture accidentelle de l'une des lames de suspension (2), ou de la tige de liaison (13).

9. Balance de mesure selon l'une quelconque des revendications 1 à 8 caractérisée en ce que le système (4) de mesure de poussée disposé entre la structure interface et le chassis mobile comporte un élément ajustable (13c) permettant le positionnement longitudinal de la structure interface (1) et du chassis mobile (3) entre eux sans précontrainte mécanique des lames (2) de suspension.

10. Balance de mesure selon l'une quelconque des revendications 1 à 9, caractérisée en ce que le chassis mobile (3) a une forme de U horizontal ouvert vers l'avant et en ce que la structure interface (1) est constituée de deux parties avant séparées (1A, 1B) et d'une partie arrière centrale (1C), chacune de ces trois parties supportant une des lames (2) de suspension.

11. Balance de mesure selon l'une quelconque des revendications 1 à 9, caractérisée en ce qu'elle comporte un système de hissage par treuil (8) de l'ensemble formé par le turboréacteur (5) équipé de son adaptateur (6), vers le chassis mobile.

12. Balance de mesure selon la revendication 11 caractérisée en ce que le système de hissage est porté par le plafond (P) du bâtiment.

13. Balance de mesure selon la revendication 11, caractérisée en ce que le système de hissage (8) est mobile sur un monorail (9) horizontal disposé au plafond du bâtiment et pénétrant entre les parties avant (1A, 1B) de la structure interface (1).

14. Balance de mesure selon la revendication 11, caractérisée en ce que le système de hissage est porté par une structure (28, 29) solidaire du chassis mobile (3).

15. Balance de mesure selon l'une quelconque des revendications 1 à 14 caractérisée en ce que le chassis mobile comporte au moins un boîtier de raccordement (31) dans lequel viennent se connecter toutes les liaisons électro- hydrauliques (30) du turboréacteurà tester, ledit boîtier étant lié (32) avec des installations de mesure de la balance.

## Patentansprüche

1. Waage zum Messen des Achsialschubs eines Turbinenstrahltriebwerks, bestehend in bekannter Weise aus einem beweglichen Rahmen (3), der mit biegsamen Aufhängungsplättchen (2) an einer Zwischenkonstruktion (1) hängt, die an der Decke (P) eines Gebäudes befestigt ist, wobei der bewegliche Rahmen geeignet ist, ein mit einem Adapter (6) ausgerüstetes Turbinenstrahltriebwerk zu halten, und ein kombiniertes Meßsystem (4) zur Messung des Achsialschubs aufweist, das an einer Struktur (11) befestigt ist und das Messen der von dem Turbinenstrahltriebwerk in Längsrichtung ausgeübten Kraft ermöglicht, die sich bei Einschalten des Turbinenstrahltriebwerks über den beweglichen Rahmen und eine Verbindungsstange (13) überträgt, wobei die genannten Aufhängungsplättchen aus zwei vorderen Aufhängungsplättchen (2), die in einer quer liegenden Ebene und bezogen auf die Mittelebene in Längsrichtung der Waage symmetrisch zueinander angeordnet sind, und einem hinteren Aufhängungsplättchen (2), das quer in der Mittelebene der Waage angeordnet ist, bestehen, wobei die drei Plättchen eine isostatische Aufhängung des bewegliche Rahmens herstellen,
dadurch gekennzeichnet,
daß der Adapter (6) unter dem bewegliche Rahmen (3) mittels dreier Zentriervorrichtungen (23) positioniert wird, die in der axialen Verlängerung der drei Aufhängungsplättchen (2) angeordnet sind und geeignet sind, den Adapter (6) und den bewegliche Rahmen (3) in sechs Freiheitsgraden miteinander zu verriegeln, wobei die hintere Zentriervorrichtung (23c) drei Freiheitsgrade sperrt, während die beiden vorderen Zentriervorrichtungen (23a, 23b) zwei bzw. einen Freiheitsgrad sperren.

2. Waage zum Messen nach Anspruch 1, dadurch gekennzeichnet, daß die hintere Zentriervorrichtung (23c) aus einem senkrechten Finger des Adapters (6) besteht, der eine konische tragende Fläche (232a) aufweist, die in Kontakt mit einer torischen Fläche (232b) des beweglichen Rahmens (3) kommt, wobei die genannte hintere Zentriervorrichtung an dem theoretischen Punkt des Zusammenlaufens an der Längsachse angeordnet ist, durch den die Schubkraft des Turbinenstrahltriebwerks verläuft.

3. Waage zum Messen nach Anspruch 1, dadurch gekennzeichnet, daß eine erste vordere Zentriervorrichtung aus einem senkrechten Finger (23a) des Adapters (6) besteht, der eine kugelförmige tragende Fläche (230a) aufweist, die in Kontakt mit einem von dem beweglichen Rahmen (3) gehaltenen Winkelteil (232b) kommt.

4. Waage zum Messen nach Anspruch 1, dadurch gekennzeichnet, daß die zweite vordere Zentriervorrichtung (23b) aus einem senkrechten Finger des Adapters (6) besteht, der ein ebenes Ende (231a) aufweist, das sich in Kontakt mit einer ebenen Fläche (231b) des beweglichen Rahmens (3) befindet.

5. Waage zum Messen nach einem der Ansprüche 1 bis 4, dadurch gekennzeichnet, daß auf jedem Zentrierfinger (23) des Adapters (6) ein Ring (33) mit BlockierungsÖsen (35) sitzt, die mit Blockierungshaken (27) zusammenwirken, die auf dem beweglichen Rahmen (3) sitzen.

6. Waage zum Messen nach Anspruch 5, dadurch gekennzeichnet, daß die Blockierungsringe (33) an den Zentrierfingern (23) mittels eines Kugelgelenksystems (34) befestigt sind.

7. Waage zum Messen nach einem der Ansprüche 5 oder 6, dadurch gekennzeichnet, daß die Blockierungshaken (27) die Form einer Exponentialspirale (273) hat.

8. Waage zum Messen nach einem der Ansprüche 1 bis 7, dadurch gekennzeichnet, daß zwischen der Zwischenkonstruktion und dem beweglichen Rahmen vier senkrechte Sicherheitsstangen (7) angeordnet sind, die geeignet sind, den beweglichen Rahmen (3) bei Transport und Aufstellung der Waage ohne Spiel zu halten sowie den genannten beweglichen Rahmen (3) bei Betrieb der Waage mit Spiel zu halten, wobei die genannten Sicherheitsstangen geeignet sind, die Gesamtanordnung des beweglichen Rahmens, des Adapters und des Turbinenstrahltriebwerks bei unvorhergesehenem Brechen eines der Aufhängungsplättchen (2) oder der Verbindungsstange (13) zu halten.

9. Waage zum Messen nach einem der Ansprüche 1 bis 8, dadurch gekennzeichnet, daß das Meßsystem (4) zur Messung des Achsialschubs, das zwischen der Zwischenkonstruktion und dem beweglichen Rahmen angeordnet ist, ein einstellbares Element (13c) aufweist, mit dem die Zwischenkonstruktion (1) und der bewegliche Rahmen (3) ohne mechanische Vorspannung der Aufhängungsplättchen (2) in Längsrichtung zueinander positioniert werden können.

10. Waage zum Messen nach einem der Ansprüche 1 bis 9, dadurch gekennzeichnet, daß der bewegliche Rahmen (3) die Form eines nach vorne offenen, waagrechten U hat und daß die Zwischenkonstruktion (1) aus zwei einzelnen vorderen Teilen (1A, 1B) und einem mittleren hinteren Teil (1C) besteht, wobei jedes dieser drei Teile eines der Aufhängungsplättchen (2) hält.

11. Waage zum Messen nach einem der Ansprüche 1 bis 9, dadurch gekennzeichnet, daß sie ein Windensystem (8) zum Heben der Gesamtanordnung des Turbinenstrahltriebwerks (5) mit seinem Adapter (6) zu dem beweglichen Rahmen aufweist.

12. Waage zum Messen nach Anspruch 11, dadurch gekennzeichnet, daß das Windensystem von der Decke (P) des Gebäudes gehalten wird.

13. Waage zum Messen nach Anspruch 11, dadurch gekennzeichnet, daß das Windensystem (8) an einer waagerechten, an der Decke des Gebäudes angeordneten Einschienenbahn (9) verfahrbar ist, die zwischen den vorderen Teilen (1A, 1B) der Zwischenkonstruktion (1) verläuft.

14. Waage zum Messen nach Anspruch 11, dadurch gekennzeichnet, daß das Windensystem von einer Konstruktion (28, 29) gehalten wird, die mit dem beweglichen Rahmen (3) fest verbunden ist.

15. Waage zum Messen nach einem der Ansprüche 1 bis 14, dadurch gekennzeichnet, daß der bewegliche Rahmen mindestens einen Anschlußkasten (31) aufweist, in dem alle elektrohydraulischen Verbindungen (30) des zu testenden Turbinenstrahltriebwerks angeschlossen werden, wobei der genannte Kasten mit Meßinstallationen der Waage verbunden (32) ist.

## Claims

1. Thrust measurement balance for turboreactor engines comprising in known fashion a mobile chassis (3) suspended by flexible suspension arms (2) from an interface structure (1) fixed to the ceiling (P) of a building, the mobile chassis being able to support a turboreactor engine fitted with an adapter (6) and comprising in combination a thrust-measuring system (4) fixed to a structure (11) and permitting the measurement of the longitudinal force exerted by the turboreactor engine and which passes through the mobile chassis and a link rod (13), when the turboreactor engine is running, the said suspension arms being composed of two front suspension arms (2) placed in a transverse plane, symmetrically in relation to each other relative to the longitudinal median plane of the balance and a rear suspension arm (2) placed transversely in the median plane of the balance, the three arms forming an isostatic suspension for the mobile chassis, characterised in that the adapter (6) is positioned on the mobile chassis (3) by means of three centering devices (23) placed in the axial extension of the three arms (2) and able to provide isostatic limits of six degrees of free movement between the adapter (6) and the mobile chassis (3), the rear centering device (23c) offering three degrees of free movement whilst the two front centering devices (23a, 23b) provide respectively two degrees and one degree of free movement.

2. Measuring balance in accordance with Claim 1, characterised in that the rear centering device (23c) is constituted by a vertical finger on the adapter (6) comprising a conical extension (232a) in contact with a ring-shaped surface (232b) on the mobile chassis (3), the said rear centering device being placed at the point of theoretical conjunction of the horizontal axis through which the thrust of the turboreactor engine passes.

3. Measuring balance in accordance with Claim 1, characterised in that the first front centering device is constituted by a vertical finger (23a) on the adapter (6) comprising a spherical extension (230a) in contact with a V-shaped ring (230b) carried on the mobile chassis (3).

4. Measuring balance in accordance with Claim 1, characterised in that the second of the front centering devices (23b) is constituted by a vertical finger on the adapter (6) comprising a flat end (231a) in contact with a flat surface (231b) on the mobile chassis (3).

5. Measuring balance in accordance with any of Claims 1 to 4, characterised in that on each centering finger (23) of the adapter (6) is fitted a ring (33) comprising locking lugs (35) working in conjunction with locking hooks (27) carried on the mobile chassis (3).

6. Measuring balance in accordance with Claim 5, characterised in that the locking rings (33) are carried on the centering fingers (23) by means of a ball and socket system (34).

7. Measuring balance in accordance with either of Claims 5 or 6, characterised in that the locking hooks (27) have a logarithmic spiral shape. (273).

8. Measuring balance in accordance with any of Claims 1 to 7, characterised in that between the interface structure and the mobile chassis are placed four vertical safety bars (7) capable of maintaining the mobile chassis without play during transport and installation of the balance and of maintaining with play the said mobile chassis (3) during the operation of the balance, the said safety bars being able to support the assembly formed by the mobile chassis, the adapter and the turboreactor engine in the event of the accidental breakage of one of the suspension arms (2), or of the link rod (11).

9. Measuring balance in accordance with any of Claims 1 to 8, characterised in that the thrust-measuring system (4) placed between the interface structure and the mobile chassis comprises an adjustable element (13c) permitting the longitudinal positioning of the interface structure (1) of the mobile chassis (3) between them without mechanically prestressing the suspension arms (2).

10. Measuring balance in accordance with any of Claims 1 to 9, characterised in that the mobile chassis (3) has the shape of a horizontal U open towards the front and in that the interface structure (1) is made up of two separate front parts (1A, 1B) and a central rear part (1C), each of these three parts supporting one of the suspension arms (2).

11. Measuring balance in accordance with any of Claims 1 to 9, characterised in that it comprises a hoisting system using a winch (8) for raising the assembly formed by the turboreactor engine (5) fitted with its adapter (6), up to the mobile chassis.

12. Measuring balance in accordance with Claim 11, characterised in that the hoisting system is carried on the ceiling (P) of the building.

13. Measuring balance in accordance with Claim 11, characterised in that the hoisting system (8) is movable along a horizontal monorail (9) sited under the ceiling of the building and penetrating between the front parts (1A, 1B) of the interface structure (1).

14. Measuring balance in accordance with Claim 11, characterised in that the hoisting system is carried on a structure (28, 29) firmly attached to the mobile chassis (3).

15. Measuring balance in accordance with any of Claims 1 to 14 , characterised in that the mobile chassis comprises at least one junction box (31) into which come for connection all the electro-hydraulic (30) circuits of the turboreactor engine to be tested, the said junction box being linked (32) to the measuring instruments of the balance.
